# EUROPÄISCHE PATENTSCHRIFT

(11) **EP 3 130 518 B1**
(45) Veröffentlichungstag und Bekanntmachung des Hinweises auf die Patenterteilung: **26.06.2019**
(21) Anmeldenummer: 16182630.0
(22) Anmeldetag: 03.08.2016
(51) Int. Cl.: B61D 23/00, B60R 3/00, B60R 3/04

(54) **SCHIENENFAHRZEUGTRITTBRETT MIT VEREISUNGSSCHUTZ**
RAIL VEHICLE RUNNING BOARD WITH ICING PROTECTION
MARCHEPIED DE VEHICULE SUR RAILS DOTE D'UNE PROTECTION CONTRE LE GIVRE

(30) Priorität: 14.08.2015 DE 202015104297 U
(43) Veröffentlichungstag der Anmeldung: 15.02.2017
(73) Patentinhaber: ALSTOM Transport Technologies, 93400 Saint-Ouen (FR)
(72) Erfinder: PAUL, Oliver, 38304 Wolfenbüttel (DE)
(74) Vertreter: Lavoix

(56) Entgegenhaltungen:
- US-A- 644 842
- US-A- 1 090 534
- US-A- 2 130 131
- US-A- 2 146 668
- US-A- 2 322 965
- US-A- 2 501 819
- US-A1- 2008 276 832

## Beschreibung

Die vorliegende Erfindung betrifft ein Trittbrett für ein Schienenfahrzeug für den Einsatz unter winterlichen Bedingungen, wobei das Trittbrett folgendes umfasst:
- eine Längsseite, die, wenn das Trittbrett im Schienenfahrzeug verbaut ist, sich in Längsrichtung des Schienenfahrzeugs erstreckt; und
- eine Trittfläche mit mehreren Zwischenräumen, die geeignet sind, Schneematsch durch das Trittbrett hindurchrutschen zu lassen.

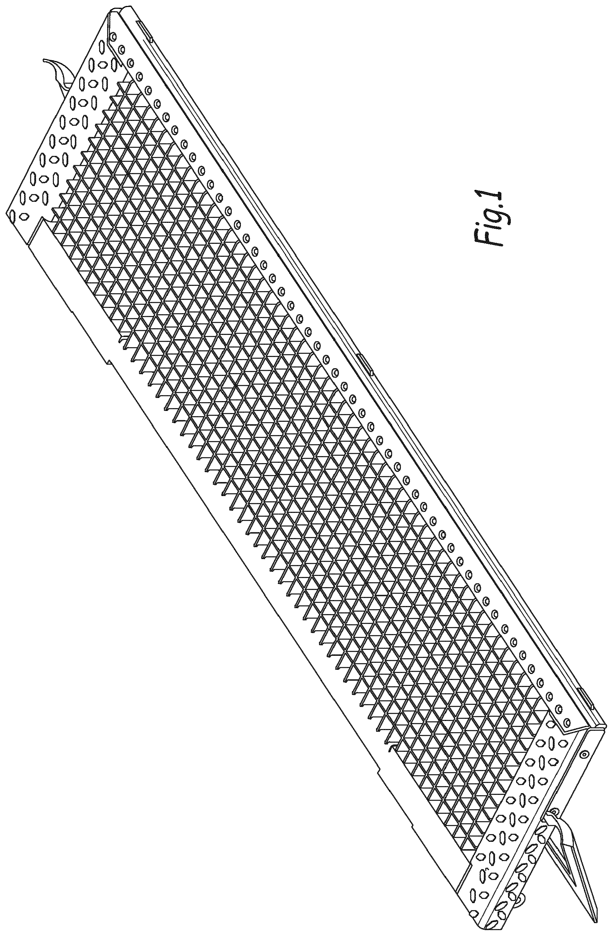

Ein solches Trittbrett ist bekannt und in Figur 1 dargestellt. Es wird beispielsweise bei den Triebzügen Coradia Nordic der Anmelderin eingesetzt. Dieses bekannte Trittbrett hat den Nachteil, dass es beim Einsatz unter winterlichen Bedingungen stark vereist. Dies kann den Betrieb des Schienenfahrzeugs beeinträchtigen.

Die US 2 322 965, US 1 090 534 und US 644 842 beschreiben ebenfalls Trittbretter, welche eine Trittfläche mit mehreren Zwischenräumen aufweisen.

Folglich ist es eine Aufgabe der Erfindung, ein Trittbrett bereitzustellen, welches im Winter bei Eis und Schnee besser gegen Vereisung geschützt ist.

Diese Aufgabe wird durch ein Trittbrett gelöst, welches die Merkmale des Anspruchs 1 aufweist.

Dadurch, dass die Länge der Zwischenräume eine bestimmte Mindestgröße hat, ist sichergestellt, dass der Großteil des Schneematsches, der auf das Trittbrett auftrifft, durch dieses hindurchrutscht. Folglich bleibt wenig Schneematsch, der vereisen könnte, am Trittbrett hängen.

Gemäß bevorzugten Ausführungsformen umfasst das erfindungsgemäße Trittbrett eines, mehrere oder alle der Merkmale der Ansprüche 2 bis 6, in allen technisch möglichen Kombinationen.

Die Erfindung betrifft ebenfalls ein Schienenfahrzeug gemäß Anspruch 7.

Vorzugsweise umfasst das erfindungsgemäße Schienenfahrzeug zusätzlich eines, mehrere oder alle der folgenden Merkmale der Ansprüche 8 und 9, in allen technisch möglichen Kombinationen.

Die Erfindung wird nun mit Bezug auf die Zeichnungen im Detail beschrieben, wobei:
Figur 1 eine perspektivische Draufsicht des bekannten Trittbretts ist;
Figur 2 eine Draufsicht eines erfindungsgemäßen Trittbretts ist;
Figur 3 eine Ansicht von unten des Trittbretts der Figur 2 ist;
Figur 4 ein Teilquerschnitt durch ein erfindungsgemäßes Schienenfahrzeug ist, das mit dem Trittbrett der Figuren 2 und 3 ausgerüstet ist; und
Figur 5 ein Teilquerschnitt durch ein erfindungsgemäßes Schienenfahrzeug ist, das mit einer Variante des erfindungsgemäßen Trittbretts ausgerüstet ist.

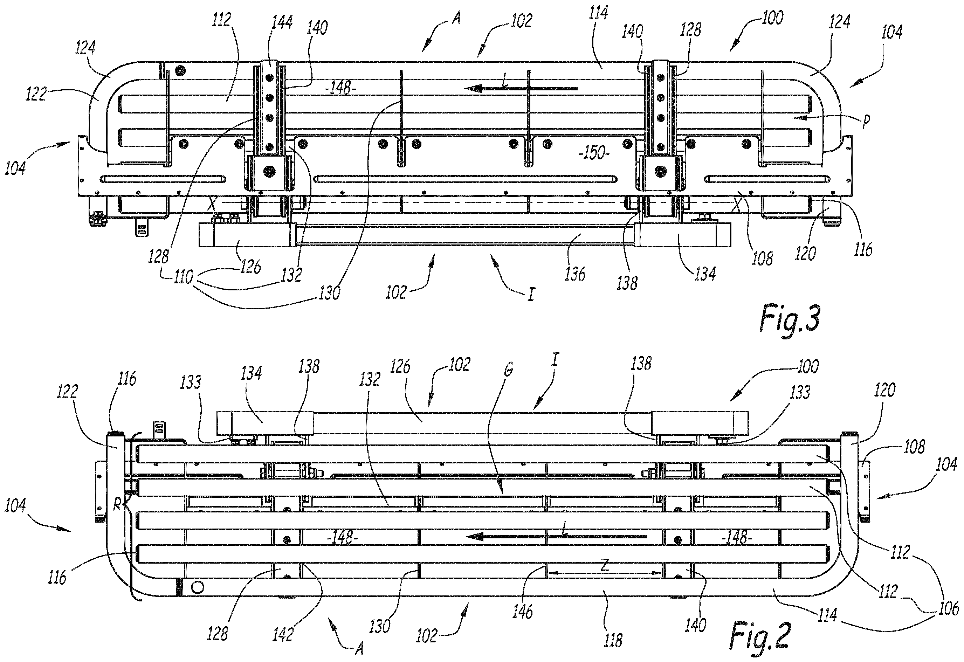

Die Figuren 2 und 3 zeigen eine erste Ausführungsform 100 eines erfindungsgemäßen Trittbretts von unten und von oben.

Dieses Trittbrett 100 wird in einem Personen befördernden Schienenfahrzeug, wie z.B. einem Triebwagen oder einem Triebzug, eingesetzt. Es wird in den Eingangsbereichen unterhalb der Türen des Schienenfahrzeugs installiert. Das Trittbrett 100 überbrückt den Spalt zwischen dem Schienenfahrzeug und dem Bahnsteig, wenn das Schienenfahrzeug an einem Bahnhof hält. Durch das Trittbrett 100 wird der Einstieg in das Schienenfahrzeug erleichtert.

Das Trittbrett 100 hat eine im Wesentlichen rechteckige Form mit zwei Längsseiten 102 und zwei Querseiten 104. Wenn das Trittbrett 100 im Schienenfahrzeug verbaut ist, erstrecken sich die Längsseiten 102 in Längsrichtung L oder auch Fahrtrichtung des Schienenfahrzeugs. Die Längsrichtung L ist durch einen Pfeil angegeben. Mit dem Bezugszeichen A wird die Außenseite oder auch Auftrittseite des Trittbretts 100 gekennzeichnet. Mit dem Bezugszeichen I wird die Innenseite oder auch Montageseite des Trittbretts 100 gekennzeichnet. Die Auftrittseite A des Trittbretts 100 ist diejenige Seite, die über das Schienenfahrzeug hinausragt, wenn das Trittbrett 100 am Schienenfahrzeug montiert ist. Die Montageseite I des Trittbretts 100 ist diejenige Seite, die an das Schienenfahrzeug montiert wird.

Das Trittbrett 100 umfasst eine Trittfläche 106, eine Blende 108, sowie eine die Trittfläche 106 und die Blende 108 tragende Tragstruktur 110.

Die Trittfläche 106 kann auf ihrer Oberseite über einen Antirutschbelag verfügen. Dabei kann es sich um eine Beschichtung oder eine aufgeklebte Folie handeln.

Die Trittfläche 106 wird durch mehrere in einer Reihe R angeordnete Rohre 112, 114 gebildet. Die Rohre 112, 114 sind derart angeordnet, dass sie sich, wenn das Trittbrett 100 im Schienenfahrzeug verbaut ist, in Längsrichtung L des Schienenfahrzeugs erstrecken. Die Enden der Rohre 112, 114 können mit Stopfen 116 verschlossen sein.

Die Querschnittsform der Rohre ist bevorzugt die eines Kreises. Die Rohre können aber auch im Querschnitt eine andere Form aufweisen, wie z.B. eine Dreiecksform, eine Quadratform oder eine Trapezform.

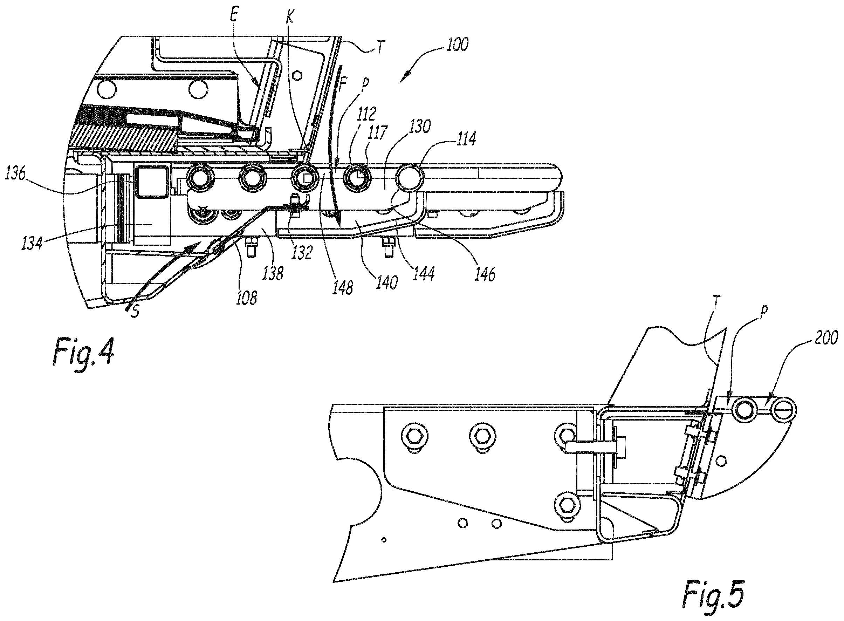

Im Innern der Rohre 112, 114 kann eine Heizeinrichtung 117 zum Beheizen der Trittfläche 106 vorgesehen sein, siehe Figur 4. Die Heizeinrichtung 117 besteht bevorzugt aus einem elektrischen Heizwiderstand, der im Hohlraum des Rohres 112, 114 verlegt ist. Um Energie zu sparen, können gezielt nur einige der Rohre 112, 114 eine Heizeinrichtung 117 aufweisen.

Bei der dargestellten Ausführungsform wird die Trittfläche 106 durch fünf Rohre gebildet. Vier dieser Rohre, die Rohre 112, sind identische gerade Zylinderrohre. Die Zylinderrohre 112 sind nebeneinander und parallel zueinander angeordnet.

Das die Reihe R zur Außenseite A hin abschließende Rohr 114 ist ein U-förmiger Bügel. Der Bügel 114 hat eine Basis 118, die an ihren Enden in jeweils einen Schenkel 120, 122 mündet. Die Schenkel 120, 122 umgreifen die Zylinderrohre 112. Es ist von Vorteil, wenn die Ecken 124 des Bügels 114 abgerundet sind, da sich dann Personen weniger leicht am Trittbrett 100 verletzen können.

Vorzugsweise bilden ein erster Schenkel 120 und die Basis 118 ein einstückiges L-förmiges Rohr. Der zweite Schenkel 122 ist vorzugsweise als getrenntes Bauteil vorgesehen. Er lässt sich separat vom Trittbrett 100 abnehmen, um so den Zugang zum Innern der Zylinderrohre 112 zu ermöglichen.

Die Tragstruktur 110 umfasst einen Montagekörper 126, zwei sich vom Montagekörper zur Außenseite A hin erstreckende Hauptträger 128, mehrere die Trittfläche 106 versteifende Querstreben 130, sowie eine Befestigungsleiste 132.

Der Montagekörper 126 dient zur Montage des Trittbretts 100 mittels Befestigungsmitteln wie etwa Schraubbolzen 133 am Schienenfahrzeug. Vorzugsweise handelt es sich um einen Montagebalken 126, der im montierten Zustand des Trittbretts 100 in Fahrzeuglängsrichtung L verläuft. Der Montagebalken 126 besitzt jeweils einen Montageblock 134 an seinen Enden. Die Montageblöcke 134 sind über ein Profil 136, z.B. ein Vierkantprofil, miteinander verbunden.

Die Hauptträger 128 erstrecken sich im montierten Zustand des Trittbretts 100 quer zur Fahrzeuglängsrichtung L. Die Trittfläche 106 liegt auf beiden Hauptträgern 128 auf. Jeder Hauptträger 128 verläuft unterhalb der Trittfläche 106 über dessen gesamte Breite.

Jeder Hauptträger 128 umfasst ein Schwenklager 138 und einen im Schwenklager 138 schwenkbar gelagerten Schwenkarm 140. Die Schwenklager 138 sind fest am Montagebalken 126 montiert. Die beiden Schwenkarme 140 weisen vorzugsweise halbkreisförmige Aussparungen 142 auf, in denen die Rohre 112, 114 aufgenommen sind.

Dank der beiden Schwenklager 138 kann die Trittfläche 106 mitsamt den Schwenkarmen 140 relativ zum Montagebalken 126 um eine waagerechte Längsachse X-X nach oben wegklappen. Dadurch kann das Trittbrett 100 im Einsatz am Schienenfahrzeug nach oben ausweichen, wenn es auf eine Bahnsteigkante trifft.

Vorzugsweise ist die Unterseite der Schwenkarme 140 mit einer Stoßfängereinrichtung 144 ausgestattet. Dies kann beispielsweise eine Stoßfängerkufe 144 aus Kunststoff sein.

Die Querstreben 130 verlaufen unterhalb der Trittfläche 106 über deren gesamte Breite. Jede Querstrebe hat Aussparungen 146, in welche die Rohre 112, 114 eingelassen sind. Die Querstreben sind als Bleche ausgebildet, die in Fahrzeuglängsrichtung L möglichst schmal sind, damit möglichst wenig durch das Trittbrett 100 hindurchfallender Schnee an ihnen hängen bleibt.

Die Rohre 112, 114, die Querstreben 130 und die Hauptträger 128 bilden gemeinsam ein Gitter G mit Maschen 148. Die Maschen entsprechen Zwischenräumen 148 in der Trittfläche 106. Die Zwischenräume 148 sind zwischen den Rohren 112, 114 angeordnet.

Erfindungsgemäß beträgt die Länge Z eines jeden Zwischenraums 148 entlang der durch die Längsseite 102 des Trittbretts 100 vorgegebenen Richtung L mindestens 50 Millimeter. So wird sichergestellt, dass die Zwischenräume 148 eine gewisse Mindestgröße nicht unterschreiten, unter welcher das Gitter G zu feinmaschig wird und zu viel Schneematsch auffängt. Wenn die Länge Z sogar größer gleich 100 Millimeter ist, hält das Gitter G kaum noch herabfallenden Schneematsch fest.

Die Befestigungsleiste 132 befindet sich unterhalb der Trittfläche 106. Sie dient zur Befestigung der Blende 108 am Trittbrett 100, siehe auch Figur 4. Die Befestigungsleiste 132 verläuft in Fahrzeuglängsrichtung L. Sie wird von den Querstreben 130 und den Hauptträgern 128 getragen.

Wie man es den Figuren 3 und 4 entnimmt, ist die Blende 108 als Schürze ausgebildet. Sie verdeckt einen Spalt S zwischen dem Schienenfahrzeug und dem montierten Trittbrett 100. Die Blende 108 hat mehrere Montagewinkel 150 zur Befestigung an der Befestigungsleiste 132.

In Figur 4 ist das Trittbrett 100 im einsatzbereiten Zustand am Schienenfahrzeug zu sehen. Das Trittbrett 100 ist an einem Eingang E unterhalb einer Tür T des Schienenfahrzeugs montiert. Die Tür T besitzt eine Unterkante K.

Wie es durch die punktierten Linien angedeutet ist, kann das Trittbrett 100 zwischen einer in das Schienenfahrzeug eingefahrenen Stellung und einer ausgefahrenen Stellung verfahren werden. Dabei zeigen die durchgezogenen Linien die eingefahrene Stellung und die punktierten Linien die ausgefahrene Stellung. Das Trittbrett 100 wird beim Halt an einem Bahnhof ausgefahren, um den Spalt zwischen dem Eingang E und dem Bahnsteig zu verkleinern. Während der Fahrt befindet sich das Trittbrett 100 in der eingefahrenen Stellung.

Auch im eingefahrenen Zustand ragt das Trittbrett 100 ein Stück weit über das Schienenfahrzeug hinaus. Dementsprechend ist das Trittbrett 100 ständig der Witterung ausgesetzt. Insbesondere fällt regelmäßig sich an der Außenfläche der Tür T ansammelnder Schneematsch in Brocken auf den vorstehenden Teil des eingefahrenen Trittbretts 100.

Das Trittbrett 100 ist derart am Eingang E und unterhalb der Tür T verbaut, dass bestimmte Zwischenräume 148 der Trittfläche 106 in der eingefahrenen Stellung des Trittbretts 100, d.h. während der Fahrt des Schienenfahrzeugs, unterhalb und in Verlängerung der Türunterkante K eine Längslücke P im Trittbrett 100 bilden. Diese Längslücke P ist auch in Figur 3 identifiziert. Die Längslücke P kann im Wesentlichen über die gesamte Länge der Trittfläche 106 verlaufen.

Von der Tür T über die Unterkante K in Richtung des Trittbretts 100 abrutschender Schneematsch rutscht dank der gezielt positionierten Längslücke P durch das Trittbrett 100 hindurch, ohne an diesem hängen zu bleiben. Der Rutschverlauf des Schneematsches ist in Figur 4 durch den Pfeil F dargestellt.

Die Figur 5 zeigt eine Abwandlung 200 des erfindungsgemäßen Trittbretts im am Schienenfahrzeug montierten Zustand. Im Gegensatz zum Trittbrett 100 gemäß der ersten Ausführungsform ist das Trittbrett 200 gemäß der zweiten Ausführungsform ortsfest am Schienenfahrzeug montiert. Das Trittbrett 200 kann sich nicht relativ zum Schienenfahrzeug bewegen. Ansonsten gleicht es dem Trittbrett 100. Es verfügt insbesondere ebenfalls über die Längslücke P zum Durchlassen von von der Tür T herabfallendem Schneematsch.

## Patentansprüche

1. Trittbrett (100, 200) für ein Schienenfahrzeug für den Einsatz unter winterlichen Bedingungen, wobei das Trittbrett (100) folgendes umfasst:
- eine Längsseite (102), die, wenn das Trittbrett im Schienenfahrzeug verbaut ist, sich in Längsrichtung (L) des Schienenfahrzeugs erstreckt; und
- eine Trittfläche (106) mit mehreren Zwischenräumen (148), die geeignet sind, Schneematsch durch das Trittbrett (100) hindurchrutschen zu lassen,
wobei die Länge (Z) eines jeden Zwischenraums (148) entlang der durch die Längsseite (102) vorgegebenen Richtung (L) mindestens 50 Millimeter beträgt,
**dadurch gekennzeichnet, dass** die Trittfläche (106) mehrere in einer Reihe (R) angeordnete Rohre (112, 114) umfasst und die Zwischenräume (148) zwischen den Rohren angeordnet sind.

2. Trittbrett (100, 200) nach Anspruch 1, wobei die Rohre (112, 114) derart angeordnet sind, dass sie sich, wenn das Trittbrett im Schienenfahrzeug verbaut ist, in Längsrichtung (L) des Schienenfahrzeugs erstrecken.

3. Trittbrett (100, 200) nach Anspruch 1 oder 2, wobei ein die Reihe (R) abschließendes Rohr (114) ein U-förmiger Bügel ist, dessen Schenkel (122, 124) vorzugsweise die übrigen Rohre (112) umgreifen.

4. Trittbrett (100, 200) nach Anspruch 3, wobei einer der Schenkel (122) des U-förmigen Bügels sich separat vom Trittbrett (100) abnehmen lässt, um so den Zugang zum Innern der übrigen Rohre (112) zu ermöglichen.

5. Trittbrett (100, 200) nach einem der Ansprüche 1 bis 4, wobei zumindest innerhalb eines Rohres (112, 114) eine Heizeinrichtung (117) zum Beheizen der Trittfläche (106) vorgesehen ist.

6. Trittbrett (100, 200) nach einem der vorhergehenden Ansprüche, wobei die Unterseite des Trittbretts (100) eine Stoßfängereinrichtung (144), beispielsweise eine oder mehrere Stoßfängerkufen, aufweist.

7. Schienenfahrzeug mit:
- einem Eingang (E) zum Betreten des Schienenfahrzeugs;
- einer Tür (T) zum Verschließen des Eingangs, wobei die Tür eine Unterkante (K) aufweist; und
- einem am Eingang und unterhalb der Tür angeordneten Trittbrett (100) nach einem der vorhergehenden Ansprüche, um den Einstieg in das Schienenfahrzeug zu erleichtern.

8. Schienenfahrzeug nach Anspruch 7, wobei das Trittbrett (100) derart am Eingang (E) und unterhalb der Tür (T) verbaut ist, dass die Zwischenräume (148) während der Fahrt des Schienenfahrzeugs unterhalb und in Verlängerung der Türunterkante (K) eine Längslücke (P) im Trittbrett bilden, sodass von der Tür (T) in Richtung des Trittbretts abrutschender Schneematsch über die Längslücke (P) durch das Trittbrett hindurchrutschen kann.

9. Schienenfahrzeug nach Anspruch 7 oder 8, wobei das Trittbrett (100) um eine waagerechte Längsachse (X-X) schwenkbar am Schienenfahrzeug angelenkt ist, sodass das Trittbrett, wenn es auf eine Bahnsteigkante trifft, durch Klappen nach oben ausweichen kann.

## Claims

1. A running board (100, 200) for a rail vehicle for use under winter conditions, wherein the running board (100) comprises the following:
- a longitudinal side (102), which, if the running board is installed in the rail vehicle, extends in the longitudinal direction (L) of the rail vehicle; and
- a tread surface (106) with several intermediate spaces (148), which are suitable for letting slush slide through the running board (100),
wherein the length (Z) of each intermediate space (148) is at least 50 millimeters along the direction (L) predetermined by the longitudinal side (102),
**characterized in that** the tread surface (106) comprises several tubes (112, 114) arranged in a row (R) and the intermediate spaces (148) are arranged between the tubes.

2. A running board (100, 200) according to Claim 1, wherein the tubes (112, 114) are arranged in such a manner that they extend in the longitudinal direction (L) of the rail vehicle, if the running board is installed in the rail vehicle.

3. A running board (100, 200) according to Claim 1 or 2, wherein a tube (114) ending the row (R) is a U-shaped bracket, the legs (122, 124) of which preferably encompass the remaining tubes (112).

4. A running board (100, 200) according to Claim 3, wherein one of the legs (122) of the U-shaped bracket can be removed separately from the running board (100), in order thus to enable access to the interior of the remaining tubes (112).

5. A running board (100, 200) according to any one of the Claims 1 to 4, wherein at least within one tube (112, 114) a heating device (117) is provided for heating the tread surface (106).

6. A running board (100, 200) according to any one of the preceding claims, wherein the lower side of the running board (100) has a bumper device (144), for example one or several bumper runners.

7. A rail vehicle with:
- an entrance (E) for entering the rail vehicle;
- a door (T) for closing the entrance, wherein the door has a lower edge (K); and
- a running board (100) according to any one of the preceding claims, arranged at the entrance and underneath the door, in order to facilitate entering into the rail vehicle.

8. A rail vehicle according to Claim 7, wherein the running board (100) is installed at the entrance (E) and underneath the door (T) in such a manner that, during the travel of the rail vehicle, the intermediate spaces (148) form a longitudinal gap (P) in the running board underneath and in an extension of the door lower edge (K) so that slush slipping off the door (T) in the direction of the running board can slide through the running board via the longitudinal gap (P).

9. A rail vehicle according to Claim 7 or 8, wherein the running board (100) is hinged on the rail vehicle and pivotable about a horizontal longitudinal axis (X-X), so that the running board, if it hits a platform edge, can be folded upwards.

## Revendications

1. Marchepied (100, 200) pour un véhicule ferroviaire, destiné à être utilisé dans des conditions hivernales, le marchepied (100) comprenant ce qui suit :
- un côté longitudinal (102) qui, lorsque le marchepied est monté dans le véhicule ferroviaire, s'étend dans la direction longitudinale (L) du véhicule ferroviaire ; et
- une surface de marche (106) avec plusieurs espaces intermédiaires (148) qui sont conçus pour laisser glisser la neige fondue à travers le marchepied (100),
la longueur (Z) de chaque espace intermédiaire (148) le long de la direction (L) prédéterminée par le côté longitudinal (102) étant d'au moins 50 millimètres,
**caractérisé en ce que** la surface de marche (106) comprend plusieurs tubes (112, 114) disposés sur une rangée (R) et les espaces intermédiaires (148) sont disposés entre les tubes.

2. Marchepied (100, 200) selon la revendication 1, les tubes (112, 114) étant disposés de façon à s'étendre dans la direction longitudinale (L) du véhicule ferroviaire lorsque le marchepied est monté dans le véhicule ferroviaire.

3. Marchepied (100, 200) selon la revendication 1 ou 2, un tube (114) terminant la rangée (R) étant un étrier en forme de U, dont les branches (122, 124) entourent de préférence les autres tubes (112).

4. Marchepied (100, 200) selon la revendication 3, une des branches (122) de l'étrier en forme de U pouvant être retirée séparément du marchepied (100), afin de permettre l'accès à l'intérieur des autres tubes (112).

5. Marchepied (100, 200) selon l'une des revendications 1 à 4, un dispositif de chauffage (117) pour le chauffage de la surface de marche (106) étant prévu au moins à l'intérieur d'un tube (112, 114).

6. Marchepied (100, 200) selon l'une des revendications précédentes, le côté inférieur du marchepied (100) comprenant un dispositif de pare-chocs (144), par exemple un ou plusieurs patins pare-chocs.

7. Véhicule ferroviaire avec :
- une entrée (E) pour accéder au véhicule ferroviaire ;
- une porte (T) pour la fermeture de l'entrée, la porte comprenant une arête inférieure (K) ; et
- un marchepied (100), selon l'une des revendications précédentes, disposé à l'entrée et en dessous de la porte afin de faciliter la montée dans le véhicule ferroviaire.

8. Véhicule ferroviaire selon la revendication 7, le marchepied (100) étant monté à l'entrée (E) et en dessous de la porte (T) de façon à ce que les espaces intermédiaires (148) forment, pendant le déplacement du véhicule ferroviaire, en dessous et dans le prolongement de l'arête inférieure de la porte (K), un interstice longitudinal (P) dans le marchepied, de façon à ce que la neige fondue glissant de la porte (T) en direction du marchepied puisse glisser par l'interstice longitudinal (P) à travers le marchepied.

9. Véhicule ferroviaire selon la revendication 7 ou 8, le marchepied (100) étant articulé par rapport au véhicule ferroviaire de manière pivotante autour d'un axe longitudinal horizontal (X-X), de façon à ce que le marchepied puisse être rabattu vers le haut lorsqu'il rencontre le bord d'un quai.
